Europäisches Patentamt

European Patent Office

Office européen des brevets

(11) Publication number: **0 167 525**
**B1**

## (12) EUROPEAN PATENT SPECIFICATION

(45) Date of publication of patent specification: **02.05.90**

(21) Application number: **84900542.6**

(22) Date of filing: **18.01.84**

(86) International application number:
**PCT/NO84/00004**

(87) International publication number:
**WO 85/03253 01.08.85 Gazette 85/17**

(51) Int. Cl.⁵: **B 32 B 15/20, B 23 K 1/20**

(54) ALUMINIUM SHAPES COATED WITH BRAZING MATERIAL AND PROCESS OF COATING.

(43) Date of publication of application:
**15.01.86 Bulletin 86/03**

(45) Publication of the grant of the patent:
**02.05.90 Bulletin 90/18**

(84) Designated Contracting States:
**AT BE CH DE FR GB LI LU NL SE**

(56) References cited:
**CH-A- 543 923**
**DE-C- 126 914**
**US-A-3 525 598**

(73) Proprietor: **NORSK HYDRO A/S**
**Bygdoy Allé 2**
**N-0257 Oslo 2 (NO)**

(72) Inventor: **KNOLL, Richard, Jr.**
**1305 S. Atlantic Ave. 470**
**Cocoa Beach, FL 32931 (US)**

(74) Representative: **Wilhelms, Rolf E., Dr. et al**
**WILHELMS, KILIAN & PARTNER Patentanwälte**
**Eduard-Schmid-Strasse 2**
**D-8000 München 90 (DE)**

Courier Press, Leamington Spa, England.

## Description

The present invention relates to a method of making a composite shape consisting of an aluminium or aluminium alloy core coated with a fluxless soldering or brazing material of zinc based alloy and to composite shapes produced by such method, especially to coated aluminium shapes, and more particularly to hollow aluminium shapes, e.g. tubes coated with a fluxless metallic layer, functioning as a soldering or low temperature brazing material when heated during assembling of the shapes to heat exchanging fins in the manufacture of heat exchangers.

The method and the composite shape of the invention are as defined in independent claims 1 and 5. The dependent claims provide preferred embodiments of both the method and the composite shape.

Contact between tubes and heat exchanging fins in heat exchangers/radiators installed in cars is today ensured mainly by two methods — mechanical expansion of tubes, or brazing of tubes to heat exchanging fins. The reliable contact achieved by the mechanical expansion of the tubes can be achieved only when using substantially round tubes, which means limited heat performance of the heat exchangers. Brazed flat copper or brass tubes are largely used in car radiators, providing a good performance when the inexpensive well-known brazing technique is used.

There is an increasing trend in the automotive industry to replace steel and copper with lighter materials like aluminium or magnesium.

Soldering and brazing of aluminium to aluminium or to other metals is, however, a difficult task because of the presence of an aluminium oxide layer formed instantly on the surface of aluminium members exposed to the atmosphere. This oxide layer prevents formation of a tight metallic bond between brazed members because of its poor wetting properties.

In practice it is therefore necessary to pretreat the aluminium surface prior to soldering/brazing in order to remove the aluminium oxide. Different methods are used for removing the oxide layer, depending on the subsequent use of the aluminium members. A method called flux brazing is widely used where the aluminium members are immersed in a bath of molten salt and brazing flux or exposed to the brazing flux which removes the oxide layer from the preheated members. The method is quite efficient with regard to the oxide removal, but it is practically impossible to avoid that the flux is entrapped at the brazed joints representing a serious corrosion problem.

Moreover, the brazing material commonly used is an Al-Si alloy which is a high temperature brazing alloy. In practice when the units to be brazed are assembled with the parts in position on the coated tubes, the assembly is then placed in a vacuum furnace and heated. However, the melting temperature of this brazing alloy is around 565 to 595°C which is not far below the melting point of aluminium, and as a result the temperature must be very closely controlled. But the silicon from the brazing alloy vaporizes and tends to deposit on surfaces within the heating apparatus, including the temperature sensors, thereby making control uncertain at best. Thus the process is not very reliable or efficient.

CH—A—5 43 923 describes the use of gallium as additive to a coating bath in combination with the destruction of the oxide layer of the aluminium shape to be coated.

Fluxless brazing processes have been conducted successfully in vacuum or inert atmosphere and are described in US Patent Nos. 3,373,482 and 3,979,042.

The common drawback of these processes is that the necessity of cleaning/pretreating procedures is not eliminated and rather high temperatures are required in order to break down the oxide layer or to create cracking in this layer. These processes are therefore expensive and limited to special applications.

It is therefore an object of the present invention to provide coated aluminium shapes, particularly hollow shapes, e.g. tubes having a fluxless coating of soldering or brazing material for fluxless soldering/fluxless brazing at low temperatures, and to provide a process for direct coating of aluminium shapes having an oxide-free, non-pretreated surface.

Another object of the invention is to provide aluminium shapes precoated with soldering or brazing material ensuring improved corrosion resistance of the shapes, such shapes being thus particularly suited for brazed aluminium heat exchangers. By shapes is meant elongated aluminium members having a cross-sectional shape such as an angle, an I or H beam, a flange, or any other of the many shapes in which elongated aluminium members are formed, and particularly hollow shapes, e.g. tubes with various cross-sectional shapes—round, flat oval etc., optionally provided with inner partition walls or multicavities.

The aluminium shapes according to the present invention provided either by extruding the aluminium in the desired shape and dimension or by any other methods of forming the shapes from aluminium are coated with a metallic layer which constitutes a fluxless soldering or brazing material for the subsequent fluxless soldering or low temperature brazing of the shapes to other structural elements. e.g. soldering or brazing of tubes to heat exchanging fins in the manufacture of heat exchangers. The soldering or brazing material applied as the coating layer consists of a zinc-based alloy.

The process of the present invention comprises the steps of forming aluminium in the desired shape, preventing contact between the surface of the formed shape and the atmosphere for avoiding oxidation of the surface prior to the subsequent coating of the outer surface with a metallic layer, and then carrying out coating of the outer surface of the shape with a metallic layer.

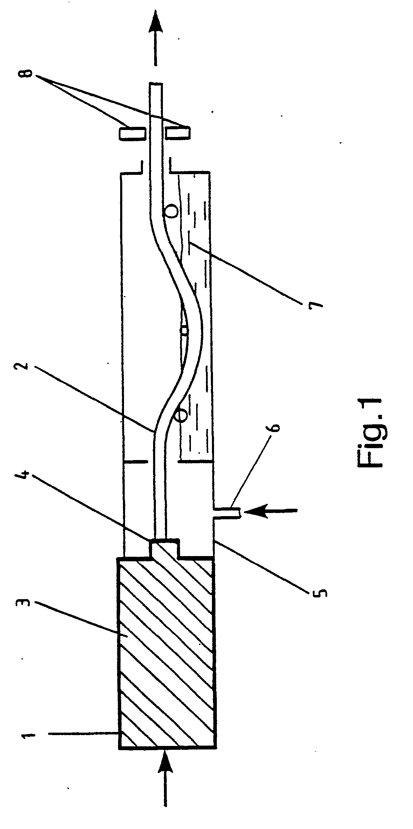

The invention will now be described in greater detail in connection with the (sole) example and the accompanying drawing, Fig. 1, which is a schematic representation of the process and the apparatus for carrying it out.

A soldering/brazing coating provided on aluminium shapes according to the present invention is a zinc-based alloy, preferably ZnAl alloy, more preferably comprising from 1.0—10.0 wt% Al and from 0 to 3.0 wt% Cu, the balance being zinc. This alloy composition allows conducting of low temperature coating, approximately at 385—420°C, and consequently low temperature and low cost brazing of the coated tubes to heat exchanging fins during assembling of heat exchangers. The addition of Al, preferentially from 3.0 to 6.0 wt%, improves the wetting of aluminium by molten zinc and in combination with Cu results in a sufficiently ductile coating of high tensile strength of the shapes in cold state.

Example

A hollow aluminium tube having a flat, oval cross-section is extruded from a conventional extruder at a temperature of about 510°C, and is passed directly, e.g. without being exposed to the ambient atmosphere, into an oxide preventing chamber connected in substantially gas-tight relation to said extruder around the extrusion die thereof. The chamber is filled with nitrogen and is about 70—100 cm long. At the end of the chamber the tube has cooled to about 400°C, an excellent temperature for applying a soldering or brazing material thereto. The thus cooled tube is then passed directly, i.e. without being exposed to the ambient atmosphere, into a bath of a Zn-Al fluxless soldering alloy composed of Al in an amount of about 3.5 to 4.5 wt%, Cu in an amount to about 2.5 to 3.5 wt%, Mg about 0.05 wt% and the balance Zn, which is at a temperature of from 380—382°C.

Thereafter the thus coated tube is passed through a conventional wiper in which the excess coating metal is wiped from the tube, and then the tube is cooled in the atmosphere.

The thus completed tube can then be easily fabricated into a structure by having pieces soldered thereto. For example, where the tube is to form the core tube of a radiator, the fins can be positioned on the tube and the thus simply passed through a heating chamber at about 400°C, whereby the fins will be soldered to the tube. No soldering flux need to be used and the soldering temperature is very low compared to the prior art which means low cost assembling of the radiators.

The apparatus for carrying out the particular coating method according to the present invention as shown in Fig. 1, comprises a forming apparatus, e.g. an extruder (1), for forming an aluminium member (2) in a desired form, especially that of a tube, from aluminium (3) supplied thereto. Surrounding the exit from the extrusion die (4) of the extruder and in substantially gas-tight relation with the end of the extruder from which the die extends, is an oxidation preventing chamber (5) to which an oxidizing preventing gas is supplied through an inlet (6), e.g. an inert gas such as nitrogen. It is sufficiently short so that the extruded shape does not cool below the desired coating temperature before it passes out of the chamber. From the oxidation preventing chamber the extruded aluminium shape is passed into a means for coating the shape, e.g. a bath (7) of soldering or brazing metal without being exposed to the atmosphere, i.e. so that it is prevented from being oxidized. In a specific embodiment of the apparatus of the invention, this is done by attaching the bath directly to the outlet end of the oxidation preventing chamber (5). In this specific embodiment the thus coated aluminium shape can then be passed through a conventional wiper (8) to wipe excess coating metal therefrom, and then cooled, either by being cooled in the ambient atmosphere or passed through a cooling means such as a water quenching apparaatus (not shown).

This means for applying the coating is here shown as a bath (7) thorugh which the aluminium shape (2) is directly passed.

However, a variety of known coating processes such as dipping, spray-coating, and flash vaporization can be used within the scope of the present invention. It is essential that the extruded shape is not exposed to the ambient atmosphere or other oxidizing atmosphere between the time it leaves the extruder and the time it is coated.

The extruded shapes in status nascendi, i.e. the nascent state, after leaving the extrusion die are free of oxide on all surfaces and remain at a temperature of approximately 400—425°C so that an additional heating of the shapes is not required. The resulting coated aluminium shapes offer a corrosion resistant, leak-proof tubing particularly suited for heat exchangers.

A further advantageous characteristic which is given by the present method to the extruded shapes as compared with conventional coating methods is improved workability. In the prior art process when the extruded aluminium shape is preheated prior to application of brazing flux or immersed in a bath of molten salt and brazing flux in order to remove the oxide coating the aluminium is heated sufficiently, which causes grain growth in the aluminium, thereby reducing the workability. In the method of the present invention, since coating takes place immediately after extrusion without an intermediate heating step, there is insufficient time for any significant grain growth.

**Claims**

1. A method of making a composite shape consisting of an aluminium or aluminium alloy core coated with a fluxless soldering or brazing material of zinc based alloy, characterized by the steps of forming an aluminium or aluminium alloy core by a process in which the core surface in a nascent state is kept substantially free of oxide in the presence of a non-reactive atmosphere, depositing an outer layer of fluxless soldering material of zinc based alloy on said surface of the core in a molten state at a temperature about the melting point of the soldering material and in the presence of the non-reactive atmosphere, and removing any excess of coating material for providing the shape with a uniformly thick coating.

2. A method according to claim 1, characterized in that the forming of the core is by a continuous forming process, and said outer layer is formed by a continuous deposition process in line with said forming process.

3. A method according to claim 1 and/or 2, characterized in that the forming of the core comprises extrudig a hollow shape.

4. A method according to at least one of the preceding claims, characterized in that the depositing step comprises deposition of the soldering material on the entire surface of said core.

5. A method according to at least one of the preceding claims, characterized in that the coating is carried out at a temperature from 385 to 420°C.

6. Composite shape produced by a method according to at least one of claims 1 to 5, in which the aluminium core is coated with a ZnAl alloy.

7. Composite shape according to claim 6 in which the aluminium core is coated with a zinc-based alloy, comprising from 1.0 to 10.0 wt% Al and from 0 to 3.0 wt% Cu, the balance being zinc.

8. Composite shape according to claim 7 in which Al is present in the zinc-based alloy in an amount of from 3.0 to 6.0 wt%.

## Patentansprüche

1. Verfahren zum Herstellen eines Verbundformteils, das aus ewinem Aluminium-oder Aluminiumlegierungskern besteht, der mit einem flußmittelfreien Hart- oder Weichlötmaterial aus einer Legierung auf Zinkbasis beschichtet ist, gekennzeichnet durch die Schritte der Bildung eines Aluminium- oder Aluminiumlegierungskernes mittels eines Verfahrens, bei dem die Kernoberfläche im naszierenden Zustand im wesentlichen oxidfrei unter einer nichtreaktiven Atmosphäre gehalten wird, des Aufbringens einer äußeren Schicht des flußmittelfreien Lötmaterials aus einer Legierung auf Zinkbasis auf die Oberfläche des Kerne im geschmolzenen Zustand bei einer Temperatur um den Schmelzpunkt des Lötmaterials und unter der nichtreaktiven Atmosphäre und des Entfernens eines Uberschusses des Beschichtungsmaterials, um ein Formteil mit einer Beschichtung gleichmaßiger Stärke zu liefern.

2. Verfahren nach Anspruch 1, dadurch gekennzeichnet, daß die Bildung des Kerne ein ununterbrochener Formvorgang ist und daß die äußere Schicht durch ein fortlaufendes Aufbringen in einer Linie mit dem Formvorgang gebildet wird.

3. Verfahren nach Anspruch 1 und/oder 2, dadurch gekennzeichnet, daß die Bildung des Kerne das Extrudieren einer Hohlform umfaßt.

4. Verfahren nach wenigstens einem der vorhergehenden Ansprüche, dadurch gekennzeichnet, daß das Aufbringen des Aufbringen des Lötmaterials auf die gesamte Oberfläche des Kerns umfaßt.

5. Verfahren nach wenigstens einem der vorhergehenden Ansprüche, dadurch gekennzeichnet, daß die Beschichtung bei einer Temperatur von 385 bis 420°C erfolgt.

6. Verbundformteil hergestellt mit dem Verfahren nach wenigstens einem der Ansprüche 1 bis 5, bei dem der Aluminiumkern mit einer ZnAl-Legierung beschichtet ist.

7. Verbundformteil nach Anspruch 6, bei dem der Aluminiumkern mit einer Legierung auf Zinkbasis beschichtet ist, die 1,0 bis 10,0 Gew.% Al und 0 bis 3,0 Gew.% Cu sowie als Rest Zink umfaßt.

8. Verbundformteil nach Anspruch 7, bei dem Al in der Legierung auf Zinkbasis in einer Menge von 3,0 bis 6,0 Gew.% vorhanden ist.

## Revendications

1. Procédé de fabrication d'une pièce composite façonnée, comprenant un noyau en aluminium ou en un alliage d'aluminium, revêtu d'un matériau de soudage ou de brasage sans fondant constitué par un alliage à base de zinc, caractérisé en ce qu'il comprend les étapes consistant à former un noyau d'aluminium ou d'un alliage d'aluminium, selon un procédé dans lequel la surface du noyau est maintenue, à l'état naissant, presque sans oxyde en présence d'une atmosphère non réactive, à déposer une couche extérieure d'un matériau de soudage sans fondant constitué par un alliage à base de zinc sur cette surface du noyau, à l'état fondu à une température correspondant environ au point de fusion du matériau de soudage, et en présence de l'atmosphère non réactive, et à éliminer tout excès de matériau de revêtement, afin de doter la pièce façonnée d'un revêtement d'une épaisseur uniforme.

2. Procédé selon la revendication 1, caractérisé en ce que le noyau est formé selon un procédé de façonnage continu, et en ce que la couche extérieure est formée selon un procédé de dépôt continu, en ligne avec ledit procédé de façonnage.

3. Procédé selon la revendication 1 et/ou la revendication 2, caractérisé en ce que le façonnage du noyau, comprend la production d'une forme creuse par extrusion.

4. Procédé selon au moins une des revendications précédentes, caractérisé en ce que l'étape de dépôt comprend le dépôt du matériau de soudage sur l'ensemble de la surface du noyau.

5. Procédé selon au moins une des revendications précédentes, caractérisé en ce que le revêtement est effectué à une température de 385 à 420°C.

6. Pièce composite façonnée produite selon un procédé tel que défini dans au moins une des revendications 1 à 5, dans laquelle le noyau d'aluminium est revêtu d'un alliage ZnAl.

7. Pièce composite façonnée selon la revendication 6, dans laquelle le noyau d'aluminium est revêtu d'un alliage à base de zinc, comprenant de 1,0 à 10,0% en poids d'aluminium, et de 0 à 3,0% en poids de cuivre, le reste consistant en zinc.

8. Pièce composite façonnée selon la revendication 7, dans laquelle le l'aluminium est présent dans l'alliage à base de zinc en une quantité de 3,0 à 6,0% en poids.

Fig.1

EP 0 167 525 B1